# EUROPÄISCHE PATENTSCHRIFT

(11) **EP 3 639 955 B1**
(45) Veröffentlichungstag und Bekanntmachung des Hinweises auf die Patenterteilung: **24.02.2021**
(21) Anmeldenummer: 19203561.6
(22) Anmeldetag: 16.10.2019
(51) Int. Cl.: B23B 31/16

(54) **SPANNFUTTER FÜR WERKZEUGMASCHINEN**
CHUCK FOR MACHINE TOOLS
MANDRINS POUR MACHINES-OUTILS

(30) Priorität: 19.10.2018 DE 102018126063
(43) Veröffentlichungstag der Anmeldung: 22.04.2020
(73) Patentinhaber: Schunk GmbH & Co. KG Spann- und Greiftechnik, 74348 Lauffen am Neckar (DE)
(72) Erfinder: Mathias, Siber, 72517 Sigmaringendorf (DE)
(74) Vertreter: Paul & Albrecht Patentanwälte PartG mbB

(56) Entgegenhaltungen:
- EP-A1- 2 821 169
- EP-A1- 2 835 197
- DE-A1- 2 930 721
- DE-A1-102017 103 564
- DE-C1- 4 016 775
- US-A- 976 452

## Beschreibung

### Spannfutter für Werkzeugmaschinen

Die vorliegende Erfindung betrifft ein Spannfutter für Werkzeugmaschinen, insbesondere für Drehmaschinen, mit einem eine Futterachse definierenden Futterkörper, der in seiner vorderen Stirnfläche mehrere sich radial zu der Futterachse erstreckende Führungsnuten zur Aufnahme von Spannbacken aufweist, wobei jeder Führungsnut eine Treibbackeneinheit zugeordnet ist, die in einer hinter der Führungsnut im Futterkörper angeordnete Führungstasche parallel zu der Führungsnut bewegbar ist und eine die Führungsnut und die Führungstasche verbindende längliche Durchgangsöffnung in axialer Richtung durchgreift und in die Führungsnut vorragt, wobei jede Treibbackeneinheit eine Treibbacke umfasst, die über eine vorderseitige Verzahnung mit einer korrespondierenden Gegenverzahnung einer Spannbacke in Eingriff bringbar ist.

Spannfutter für Werkzeugmaschinen dieser Art sind beispielsweise aus der DE 40 16 775 C1 bekannt und werden in der Praxis in erster Linie an Drehmaschinen eingesetzt, um die zu bearbeitenden Werkstücke zu spannen. Das vorbekannte als Kraftspannfutter ausgebildete Spannfutter umfasst einen Futterkörper, in dessen vorderer Stirnfläche sich drei Führungsnuten zur Aufnahme von Spannbacken radial von einer zentralen Futterachse nach außen erstrecken. Jeder Führungsnut ist eine Treibbackeneinheit zugeordnet, die einen Grundkörper und eine an diesem gehaltene und relativ zu diesem in axialer Richtung bewegbare Treibbacke umfasst. Der Grundkörper ist in einer unterhalb der Führungsnut im Futterkörper ausgebildeten Führungstasche parallel zu der Führungsnut zwischen einer inneren und einer äußeren Anschlagposition bewegbar, um die Spannbacken radial zur Futterachse zu bewegen, wenn die Treibbacke mit ihrer vorderseitigen Verzahnung mit einer korrespondierenden Gegenverzahnung einer Spannbacke in Eingriff steht.

Zum Bewegen der Spannbacken sind die Grundkörper der Treibbackeneinheiten über einen Keilhakenmechanismus mit einem im Futterkörper axial motorisch oder hydraulisch bewegbaren Spannkolben gekoppelt, so dass eine axiale Bewegung des Spannkolbens in radiale Bewegungen der Treibbackeneinheiten umgesetzt werden.

Ferner umfasst jede Treibbackeneinheit einen Ausklinkmechanismus mit einem Ausklinkelement, welches im Futterkörper um eine radial liegende Drehachse drehbar gelagert ist. Zum Entnehmen der Spannbacke ist es erforderlich, die Treibbacke in axialer Richtung abzusenken, so dass die Verzahnung der Treibbacke aus der Gegenverzahnung der Spannbacke ausser Eingriff kommt. Dazu umfasst das Ausklinkelement einen exzentrisch zu seiner Drehachse angeordneten Abschnitt, der sich in eine Radialbohrung der Treibbacke erstreckt, um beim Verdrehen des Ausklinkelements die Treibbacke in axialer Richtung zu bewegen.

Wenngleich sich derartige Spannfutter in der Praxis grundsätzlich bewährt haben, so wird zu Teilen als nachteilig angesehen, dass diese aufgrund ihres komplexen Mechanismus zum Bewegen der Treibbacke und zum radialen Bewegen des Grundkörpers störanfällig sein können, wenn Flüssigkeiten, beispielsweise Kühlschmierstoff oder Schmutz oder andere Teile, zum Beispiel bei der Werkstückbearbeitung entstehende Späne, in den Bereich der Führungstaschen eindringen können.

DE 29 30 721 A1 offenbart ein Spannfutter mit den Merkmalen des Oberbegriffs des unabhängigen Anspruchs 1.

Aufgabe der vorliegenden Erfindung ist somit, ein Spannfutter bereitzustellen, welches die zuvor genannten Nachteile vermeidet, die Störanfälligkeit minimiert und die dadurch entstehenden Ausfallzeiten reduziert.

Diese Aufgabe ist durch ein Spannfutter gemäß dem unabhängigen Anspruch 1 gelöst. Bei einem solchen Spannfutter ist in jeder Führungsnut ein radial mit den Treibbackeneinheiten bewegbares flächiges Abdichtelement vorgesehen, welches am Nutgrund anliegt und eine zentrale Aussparung aufweist, in welche die Treibbacken eingreift. Bevorzugt weist jede Treibbackeneinheit einen Grundkörper auf, an welchen die jeweilige Treibbacke gehalten ist, wobei der Grundkörper mit einem nach vorne vorstehenden Vorsprung die Durchgangsöffnung durchgreift und in die Führungsnut vorragt.

Der Erfindung liegt die Überlegung zugrunde, dem Eindringen von Flüssigkeiten und/oder Schmutz durch die Durchgangsöffnung in die Führungstasche hinein durch ein flächiges Abdichtelement, in welches der Vorsprung des Grundkörpers eingreift, entgegenzuwirken. Das Abdichtelement führt dazu, dass der vom Vorsprung des Grundkörpers nicht ausgefüllte Bereich der Durchgangsöffnung zur Führungstasche zumindest teilweise abgedeckt wird und es somit Flüssigkeiten und/oder Schmutz erschwert wird, in die Führungstasche einzudringen. Insbesondere erschwert das Abdichtelement das Eindringen von groben Schmutz und Spänen in den Bereich der Durchgangsöffnung, sodass einem Blockieren der Treibbackeneinheiten in radialer Richtung entgegengewirkt wird.

Bevorzugt umgreift das Abdichtelement den Vorsprung des Grundkörpers ringförmig, insbesondere formschlüssig und/oder liegt an dem Vorsprung mit Spiel an. Desweiteren kann das Abdichtelement derart ausgestaltet sein, dass es sich in jeder radialen Position des Grundkörpers über die gesamte radiale Länge und die Breite der Durchgangsöffnung erstreckt. Durch die vollständige Überdeckung der Durchgangsöffnung und die Anlage an dem Vorsprung des Grundkörpers wird das Eindringen von Flüssigkeiten und Schmutz in die Führungstasche erheblich erschwert, da lediglich ein den Vorsprung des Grundkörpers umgebender Spalt verbleibt, durch welchen Teile oder Flüssigkeiten in den Bereich der Führungstasche eindringen können. Eine derartige Spielpassung zwischen dem Vorsprung des Grundkörpers und der zentralen Aussparung des Abdichtelements gewährleistet eine begrenzte Beweglichkeit vom Abdichtelement relativ zum Vorsprung des Grundkörpers, sodass ein Verkanten der Treibbackeneinheiten beim radialen Bewegen vermieden wird. Gleichzeitig wird das Abdichtelement durch das Umgreifen des Vorsprungs des Grundkörpers radial geführt, so dass ein fliehkraftbedingtes Herausschleudern aus der Führungsnut ausgeschlossen ist.

In weiterer Ausgestaltung dieser Ausführungsform weist die Führungsnut einen T-förmigen Querschnitt mit einem vorderen Führungsnutabschnitt, an dem Führungsmittel für eine Spannbacke vorgesehen sind, und einen gegenüber diesem verbreiterten hinteren Endabschnitt, in welchem das Abdichtelement angeordnet ist, auf. Bevorzugt sind im Übergang vom hinteren Endabschnitt zum vorderen Führungsnutabschnitt Führungsschultern zum Halten des Abdichtelements in axialer Richtung ausgebildet, die insbesondere parallel zum Nutgrund der Führungsnut orientiert sind. Dieser Ausgestaltung liegt die Überlegung zugrunde, dass durch die Anordnung des Abdichtelements in einem eine Verbreiterung bildenden hinteren Endabschnitt der Führungsnut dieses dort in axialer Richtung gehalten wird und sich nicht unbeabsichtigt axial nach vorne aus der Führungsnut herausbewegen kann, wobei es gleichzeitig noch radial durch den in die Aussparung eingreifenden Vorsprung des Grundkörpers beweglich ist. Gleichzeitig vereinfacht eine derartige Ausgestaltung der Führungsnut die Montage des Spannfutters, da das flächige Abdichtelement von einer radialen Außenseite des Spannfutters in den hinteren Endabschnitt der Führungsnut direkt eingesetzt werden kann. Bevorzugt erstreckt sich das Abdichtelement im Wesentlichen über die gesamte Breite des hinteren Endabschnitts der Führungsnut. Dies bewirkt, dass in Breitenrichtung der Führungsnut zwischen den Nutwänden und dem Abdichtelement lediglich ein kleiner Spalt verbleibt, durch welchen Schmutz und/oder Flüssigkeiten eindringen können, wodurch eine die radiale Bewegbarkeit in der Führungsnut behindernde Ansammlung von Schmutz, insbesondere von Spänen vermieden wird.

Ferner kann das Abdichtelement in seiner zum Nutgrund weisenden Seite eine die Aussparung umgebende umlaufende Nut zur Aufnahme eines Dichtelements aufweisen. Bevorzugt liegt die umlaufende Nut vollständig außerhalb des von der Durchgangsöffnung überstrichenen Bereich des Abdichtelements, wobei in der umlaufenden Nut ein Dichtelement angeordnet ist, um einem Eindringen von Schmutz und/oder Flüssigkeiten zwischen dem Nutgrund und dem Abdichtelement entgegenzuwirken. Das Dichtelement kann dabei als O-Ring oder als Quadring ausgebildet sein. Dadurch wird erreicht, dass das Abdichtelement in axialer Richtung in dem hinteren Endabschnitt der Führungsnut radial bewegbar ist, aber gleichzeitig ein Eindringen von Schmutz und/oder Flüssigkeiten zwischen dem Nutgrund und dem Abdichtelement trotz eines möglichen Spalts vermieden wird. Darüber hinaus hat ein in die Nut eingesetzter O-Ring oder Quadring eine elastische Wirkung, so dass das Abdichtelement zwar aufgrund der Quetschung oder Pressung des O-Rings oder des Quadrings nach vorne gegen die Führungsschultern gedrückt wird und somit axial eindeutig positioniert, aber nach wie vor radial bewegbar ist. Dadurch, dass die umlaufende Nut vollständig außerhalb des von der Durchgangsöffnung überstrichenen Bereichs des Abdichtelements liegt, wird das Eindringen von Schmutz und/oder Flüssigkeiten zwischen dem Nutgrund und dem Abdichtelement in jeder radialen Lage des Abdichtelements wirksam vermieden.

Des Weiteren kann das Abdichtelement eine radial nach innen zur Futterachse gerichtete konkav ausgebildete Stirnseite aufweisen. Durch eine derartig ausgebildete Stirnseite wird vermieden, dass - falls das Spannfutter über eine zentrale Öffnung zur Aufnahme eines Werkstücks verfügt - das Abdichtelement in diese Öffnung vorragt und die wirksame Öffnung somit verkleinert, wenn sich die Treibbackeneinheit in einer radial inneren Endposition befindet. Die radial nach außen weisende Stirnseite des Abdichtelements kann dementsprechend als ebene Fläche oder konvex ausgebildet sein.

Ferner kann im Übergangsbereich von der radial inneren Stirnseite zu der Vorderseite und/oder von der radial äußeren Stirnseite zur Vorderseite des Abdichtelements eine Abstreiffase ausgebildet sein, die bevorzugt in einem Winkel von mindestens 10° und/oder höchstens 60° zur Vorderseite des Abdichtelements geneigt ist. Durch eine derartige Abstreiffase wird das Einsetzen des Abdichtelements in die Führungsnut vereinfacht. Des Weiteren wird das Risiko eines Verkantens des Abdichtelements in der Führungsnut minimiert. Die Abstreiffase bewirkt ferner, dass in die Führungsnut eindringende Späne durch die Fase in Verbindung mit den durch die Rotation des Spannfutters auftretenden Fliehkräften nach vorne abgestreift werden und somit das Risiko eines Eindringens von Spänen in den Spalt zwischen dem Abdichtelement und dem Nutgrund verringert wird. Die Abstreifwirkung hat sich dabei als umso besser herausgestellt, je flacher der Winkel der Abstreiffase ist.

In weiterer Ausgestaltung der Erfindung besteht das Abdichtelement aus einem metallischen Werkstoff, insbesondere einem Stahlwerkstoff, oder einem Kunststoff. Durch eine derartige Werkstoffauswahl wird sichergestellt, dass das Abdichtelement über eine hinreichende Steifigkeit verfügt und die Gefahr plastischer, die einwandfreie Bewegung des Abdichtelements in der Führungsnut behindernde Verformung vermieden wird.

In weiterer Ausgestaltung des Spannfutters ist die Treibbacke im Grundkörper relativ zu diesem axial zwischen einer hinteren Backenwechselstellung, in welcher die Verzahnung der Treibbacke soweit aus der Führungsnut abgesenkt ist, dass ein Backenwechsel möglich ist, und einer vorderen Arbeitsstellung, in welcher ein Backenwechsel nicht möglich ist, bewegbar, wobei die Treibbacke in einer im Grundkörper ausgebildeten Öffnung angeordnet ist. Dieser Ausgestaltung liegt die Überlegung zugrunde, dass zum Wechsel einer in die Führungsnut eingesetzten Spannbacke die Treibbacke abgesenkt werden kann, so dass die Verzahnung der Treibbacke außer Eingriff mit der Gegenverzahnung der Spannbacke kommt und die Spannbacke radial nach außen aus der Führungsnut entnommen werden kann.

Bevorzugt sind Dichtmittel vorgesehen, um ein Eindringen von Schmutz und Flüssigkeiten in den zwischen der Treibbacke und dem Grundkörper ausgebildeten Ringspalt zu vermeiden. Dazu kann als Dichtmittel ein ringförmig umlaufender O-Ring oder ein Quadring vorgesehen sein, der in einer in der Treibbacke oder im Grundkörper ausgebildeten umlaufenden Nut angeordnet ist. Ein solcher im eingebauten Zustand gequetschter oder verpresster Ring dichtet den zwischen der Treibbacke und der Öffnung des Grundkörpers, in welcher die Treibbacke angeordnet ist, entstehenden Spalt wirksam ab. Dieser Spalt ist konstruktiv bedingt, um eine Beweglichkeit der Treibbacke in der für diese vorgesehenen Öffnung des Grundkörpers zu ermöglichen, nach oben offen ausgestaltet und somit den in einer Werkzeugmaschine auftretenden Flüssigkeiten und/oder Schmutz direkt ausgesetzt, so dass ein Dichtmittel erforderlich ist, um ein Eindringen von Schmutz und/oder Flüssigkeiten durch diesen Spalt zu vermeiden.

Die Treibbackeneinheit kann in weiterer Ausgestaltung der Ausführungsform ferner einen Kontrollbolzen zur Erfassung der Anwesenheit einer Spannbacke in der Führungsnut umfassen, welcher in einer nach vorne offenen Bohrung des Grundkörpers axial beweglich angeordnet ist, wobei Dichtungsmittel vorgesehen sind, um den zwischen dem Kontrollbolzen und der Bohrung ausgebildeten Spalt gegen ein Eindringen von Schmutz und Flüssigkeiten abzudichten. Ein einen derartigen Kontrollbolzen umfassender Kontrollmechanismus erhöht die Betriebssicherheit des Spannfutters, da durch ihn eine Treibbacke nur dann in ihre Arbeitsstellung gebracht werden kann, wenn gleichzeitig eine Spannbacke in der Führungsnut angeordnet ist. Das Risiko einer Fehlbedienung wird somit erheblich minimiert. Da der Kontrollbolzen im Bereich des Vorsprungs des Grundkörpers in die Führungsnut vorragt und in einer nach vorne offenen Bohrung des Grundkörpers axial beweglich angeordnet ist, ist es auch hier erforderlich, Dichtungsmittel vorzusehen, um den zwischen dem Kontrollbolzen und der Bohrung ausgebildeten Spalt gegen ein Eindringen von Flüssigkeiten abzudichten. Bevorzugt ist dazu als Dichtungsmittel ein ringförmig umlaufender O-Ring oder ein Quadring vorgesehen, welcher in einer im Kontrollbolzen oder im Grundkörper ausgebildeten umlaufenden Nut angeordnet ist.

Des Weiteren kann in der vorderseitigen Wandung der Führungstasche eine die Durchgangsöffnung zur Führungsnut umgebende ringförmig umlaufende Nut ausgebildet sein, in welcher ein Dichtmittel, insbesondere ein O-Ring oder ein Quadring positioniert ist, um einem Eindringen von Schmutz und Flüssigkeiten durch den zwischen dem Grundkörper und der Führungstasche ausgebildeten Spalt entgegenzuwirken. Hintergrund dieser Ausgestaltung ist, dass zwischen dem Abdichtelement und dem Vorsprung des Grundkörpers aufgrund der erforderlichen Beweglichkeit und zum Vermeiden des Verkantens nach wie vor ein Spalt ausgebildet ist, durch welchen prinzipiell Flüssigkeit und/oder Schmutz in den darunterliegenden Bereich eindringen kann.

Somit ist es auch hier erforderlich, durch ein Dichtmittel das Eindringen von Schmutz und Flüssigkeiten zu vermeiden.

In weiterer Ausgestaltung dieser Ausführungsform kann jeder Treibbackeneinheit ein Ausklinkmechanismus mit einem Ausklinkelement zugeordnet sein, welches in einer Aufnahmebohrung des Futterkörpers um eine quer zur Futterachse, insbesondere radial liegende Drehachse drehbar gelagert und mit der dazugehörigen Treibbacke gekoppelt ist, um durch Drehung des Ausklinkelements die Treibbacke zwischen ihrer Backenwechselstellung und ihrer Arbeitsstellung zu verstellen, wobei Abdichtmittel vorgesehen sind, um den zwischen dem Ausklinkelement und der Aufnahmebohrung des Futterkörpers ausgebildeten Ringspalt abzudichten. Bevorzugt sind als Abdichtmittel ringförmig umlaufende O-Ringe oder Quadringe vorgesehen, welche in einer im jeweiligen Ausklinkelement oder im Futterkörper ausgebildeten ringförmig umlaufenden Nut angeordnet sind. Die Aufnahmebohrungen für die Ausklinkelemente bilden eine radial nach außen gerichtete Öffnung, sodass durch eine derartige Dichtung dem Austritt von Schmiermedium in Folge der auftretenden Fliehkräfte entgegengewirkt wird.

Hinsichtlich weiterer vorteilhafter Ausgestaltungen der Erfindung wird auf die Unteransprüche, sowie auf die nachfolgende Beschreibung eines Ausführungsbeispiels unter Bezugnahme auf die beiliegende Zeichnung verwiesen. In der Zeichnung zeigt:
- Figur 1: ein Spannfutter gemäß der vorliegenden Erfindung mit einer eingesetzten Spannbacke in einer Teilschnittansicht;
- Figur 2: das Spannfutter aus Figur 1 in einer Detailschnittansicht;
- Figur 3: das Spannfutter aus Figur 1 in einer Detailseitenansicht im Bereich einer Führungsnut;
- Figur 4: das Spannfutter aus Figur 1 ohne eingesetzte Spannbacke in einer Teilschnittansicht;
- Figur 5: das Spannfutter aus Figur 4 in einer Detailschnittansicht;
- Figur 6: das Spannfutter aus Figur 4 in einer Detailvorderansicht im Bereich einer Führungsnut;
- Figur 7: ein Abdichtelement für ein Spannfutter gemäß der vorliegenden Erfindung in perspektivischer Ansicht;
- Figur 8: das Abdichtelement aus Figur 7 in einer Rückansicht.

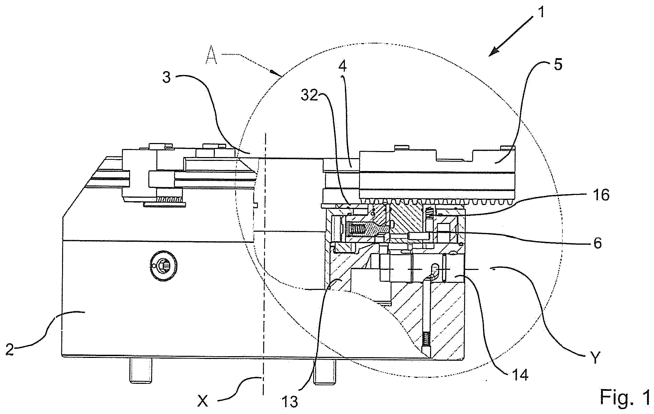

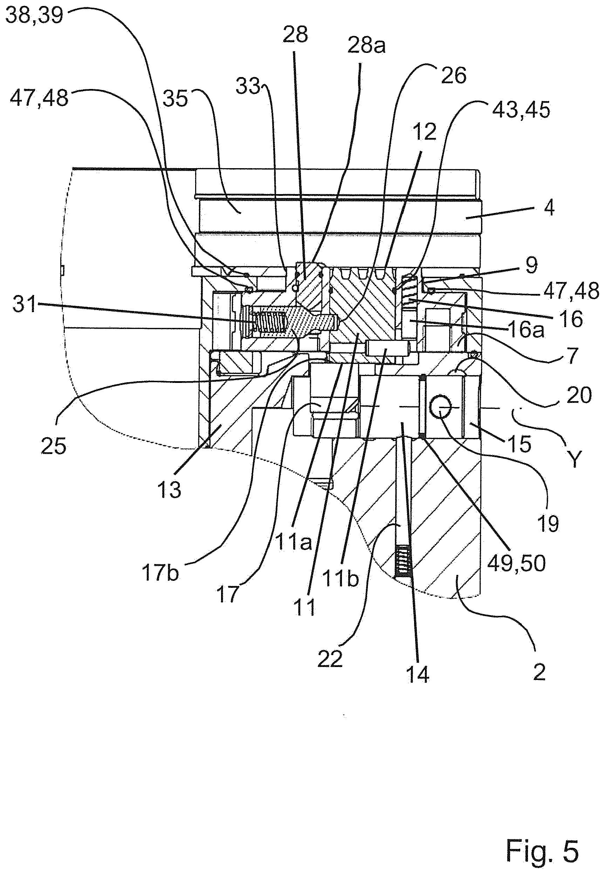

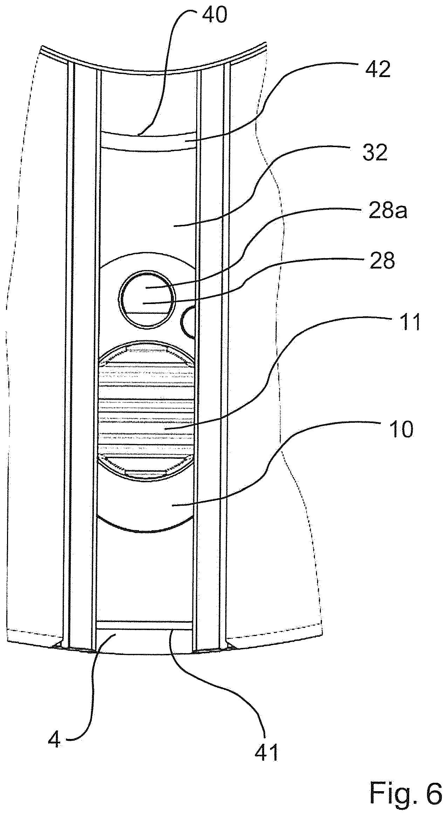

Die Figuren 1 bis 6 zeigen ein Spannfutter 1 für Werkzeugmaschinen gemäß der vorliegenden Erfindung, welches als Dreibackenfutter ausgebildet ist. Das Spannfutter 1 besitzt einen eine Futterachse X definierenden Futterkörper 2, der in seiner vorderen Stirnfläche 3 insgesamt drei über den Umfang verteilte, sich radial zur Futterachse X erstreckende Führungsnuten 4 zur Aufnahme von Spannbacken 5 aufweist.

Jeder Führungsnut 4 ist eine Treibbackeneinheit 6 zugeordnet. Diese weist einen Grundkörper 7 auf, welcher in einer unterhalb der Führungsnut 4 im Futterkörper 2 ausgebildeten Führungstasche 8 parallel zu der Führungsnut zwischen einer inneren und einer äußeren Endposition bewegbar ist. Ferner sind im Futterkörper 2 Durchgangsöffnungen 9 vorgesehen, welche jeweils die Führungsnut 4 und die darunter angeordnete Führungstasche 8 verbinden. Jeder Grundkörper 7 weist einen die jeweilige Durchgangsöffnung 9 axial durchsetzenden und in die Führungsnut 4 ragenden Vorsprung 10 auf.

Ferner umfasst jede Treibbackeneinheit 6 eine am Grundkörper 7 gehaltene und relativ zu diesem in axialer Richtung bewegbare Treibbacke 11, welche - wie in den Figuren 1 bis 3 dargestellt ist - über eine vorderseitige Verzahnung 12 mit einer korrespondierenden Gegenverzahnung der Spannbacke 5 in Eingriff steht.

Als Antrieb für die Treibbackeneinheiten 6 besitzt das Spannfutter 1 einen im Futterkörper 2 axial bewegbaren und motorisch, hydraulisch oder pneumatisch antreibbaren Futterkolben 13. Prinzipiell ist es auch denkbar, eine manuelle Betätigung beispielsweise über eine Spindel vorzusehen. Vorliegend ist der Futterkolben 13 zwischen einer vorderen Endposition und einer hinteren Endposition im Futterkörper 2 axial bewegbar angeordnet und über einen als Keilhakenmechanismus ausgebildeten Koppelmechanismus mit den Grundkörpern 7 der Treibbackeneinheiten 6 gekoppelt, um eine axiale Bewegung des Futterkolbens 13 in eine gemeinsame radiale Bewegung der Treibbackeneinheiten 6 umzusetzen. Konkret ist der Keilhakenmechanismus so ausgestaltet, dass die vordere Endposition des Futterkolbens 13 der äußeren Endposition der Grundkörper 7 entspricht.

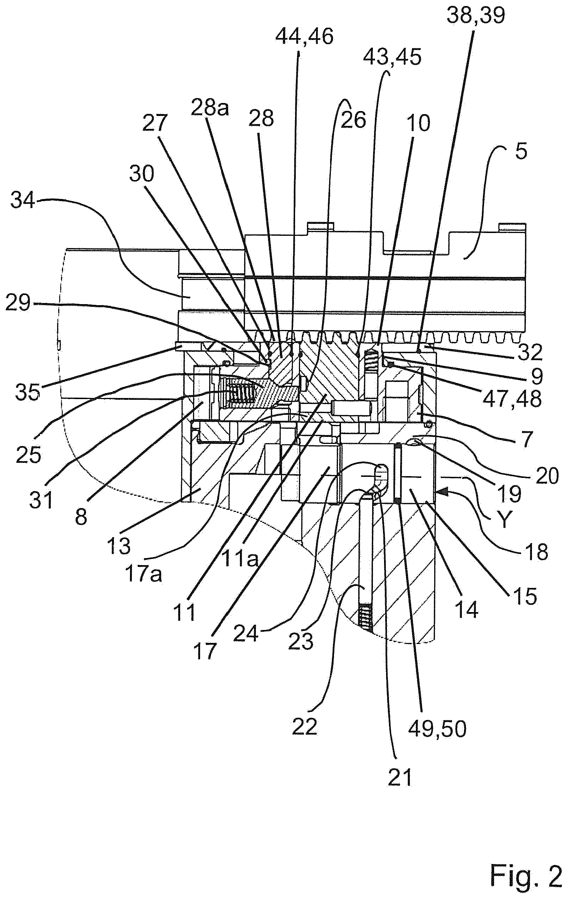

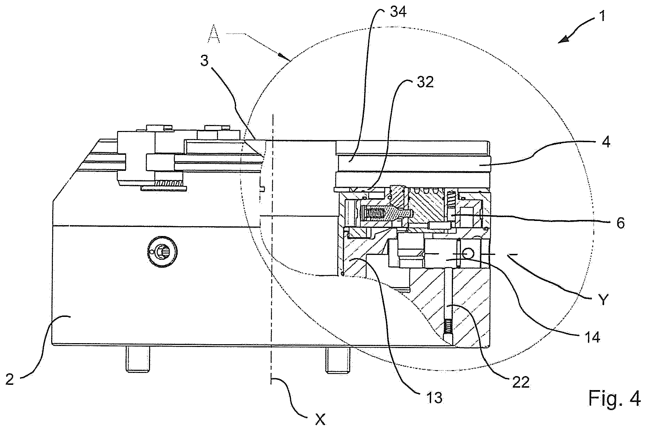

Jeder Treibbackeneinheit 6 ist ein Ausklinkmechanismus mit einem Ausklinkelement 14 zugeordnet. Dieses ist in einer Aufnahmebohrung 15 in dem Futterkörper 2 um eine radial zur Futterachse X liegende Drehachse Y drehbar gelagert. Mit der Treibbacke 11 ist das Ausklinkelement 14 derart gekuppelt, dass durch seine Drehung die Treibbacke 11 zwischen einer hinteren Backenwechselstellung und einer vorderen Arbeitsstellung bewegbar ist. In der vorderen Arbeitsstellung, die einer ersten Drehlage des Ausklinkelements 14 entspricht und in den Figuren 1 und 2 dargestellt ist, ist ein Backenwechsel nicht möglich. In der hinteren Backenwechselstellung, die einer zweiten Drehlage des Ausklinkelements 14 entspricht und in den Figuren 4 bis 6 dargestellt ist, ist die Treibbacke 11 so weit aus der Führungsnut 4 abgesenkt, dass ein Backenwechsel möglich ist. Dazu wirkt auf die Treibbacke 11 eine Druckfeder 16, welche sich gegen den Grundkörper 7 abstützt und eine axial nach hinten gerichtete Druckkraft auf die Treibbacke 11 ausübt. Konkret wird die Kraft von der Schraubendruckfeder 16 über einen sich in axialer Richtung anschließenden Zwischenbolzen 16a übertragen, welcher mit seiner Stirnfläche an einem radial nach außen von der Treibbacke 11 vorstehenden Betätigungsbolzen 11b anliegt.

Konkret weist das Ausklinkelement 14 einen Exzenternocken 17 auf, welcher an der hinteren Stirnfläche der Treibbacke 11 anliegt und derart ausgestaltet ist, dass er diese in der Arbeitsstellung positioniert, wenn sich das Ausklinkelement 14 in seiner ersten Drehlage befindet. Das Drehen des Ausklinkelements 14 erfolgt mittels eines Ausklinkschlüssels, der von außen in eine dafür vorgesehene Eingriffsöffnung 18 des Ausklinkelements 14 eingebracht wird.

Um einen labilen Gleichgewichtszustand zwischen dem Ausklinkelement 14 und der korrespondierenden Treibbacke 11 zu vermeiden, besitzt der Exzenternocken 17 an seiner Außenkontur eine in der ersten Drehlage des Ausklinkelements 14 flächig an der hinteren Stirnfläche der zugehörigen Treibbacke 11 anliegende ebene Anlagefläche 17a, sowie eine in der zweiten Drehlage des Ausklinkelements 14 flächig an der hinteren Stirnfläche der zugehörigen Treibbacke 11 anliegende ebene Kontaktfläche 17b.

Jedes Ausklinkelement 14 umfasst ferner eine Arretierungseinrichtung. Ein in die Eingriffsöffnung 18 eingebrachter Ausklinkschlüssel wird dabei in dem Ausklinkelement 14 arretiert, wenn sich das Ausklinkelement 14 außerhalb seiner der Arbeitsstellung der Treibbacke 11 entsprechenden ersten Drehlage befindet. Ein Entnehmen des Ausklinkschlüssels aus der Eingriffsöffnung 18 ist somit nur in der ersten Drehlage des Ausklinkelements 14 möglich.

Konkret umfasst der Arretiermechanismus ein als Kugel 19 ausgebildetes Eingriffselement, welches im Ausklinkelement 14 radial zu seiner Drehachse Y im Bereich der Eingriffsöffnung 18 beweglich angeordnet ist. Die Kugel 19 ist derart geführt, dass sie radial zu der Drehachse Y nach außen vorragt und aus der Eingriffsöffnung 18 zurückgezogen ist, wenn sich das Ausklinkelement 14 in seiner ersten Drehlage befindet. Wenn sich das Ausklinkelement 14 außerhalb seiner ersten Drehlage befindet, greift die Kugel 19 in die Eingriffsöffnung 18 ein und arretiert einen in diese eingesetzten Ausklinkschlüssel. Zur Realisierung der Führung der Kugel 19 ist in der radialen Wandung der Aufnahmebohrung 15 eine Vertiefung 20 ausgebildet, in welche die Kugel 19 ragt, wenn sich das Ausklinkelement 14 in seiner ersten Drehlage befindet.

Das Spannfutter 1 umfasst ferner einen Sicherungsmechanismus, der derart ausgebildet ist, dass eine Drehung des Ausklinkelements 14 aus seiner ersten Drehlage in seine der Backenwechselstellung der Treibbacke 11 entsprechende zweite Drehlage nur möglich ist, wenn sich der Futterkolben 13 in seiner vorderen Endposition befindet. Ferner wird der Futterkolben 13 in dieser vorderen Endposition arretiert, wenn sich das Ausklinkelement 14 in seiner zweiten Drehlage befindet. Dazu weist das Ausklinkelement 14 eine in seiner Außenfläche ausgebildete Steuernut 21 auf, in welche ein am Futterkörper 2 angeordneter Steuerbolzen 22 eingreift. Die Steuernut 21 umfasst einen wendelartigen Nutabschnitt 23, welcher sich in der Weise entlang eines Umfangsabschnitts des Ausklinkelements 14 erstreckt, dass das Ausklinkelement 14 bei einer Drehung um die Drehachse Y gleichzeitig translatorisch entlang seiner Drehachse Y bewegt wird, um in Eingriff mit dem Futterkolben 13 zu kommen oder diesen freizugeben. Durch den wendelartigen Nutabschnitt 23 wird somit eine Zwangsführung des Ausklinkelements 14 dahingehend realisiert, dass es entlang seiner Drehachse Y axial verstellt wird, wenn es um die Drehachse Y verdreht wird. Dabei nimmt das Ausklinkelement 14 in seiner ersten Drehlage eine radial äußere Position ein, in welcher es außer Eingriff von dem Futterkolben 13 steht und in der zweiten Drehlage eine radial innere Position ein, in der es mit dem Futterkolben 13 in Eingriff kommt, um diesen in seiner vorderen Endposition zu arretieren. Vorliegend schließt sich an den wendelartigen Nutabschnitt 23 noch ein in Umfangsrichtung erstreckender Nutabschnitt 24 an.

Des Weiteren umfasst das Spannfutter 1 einen Kontrollmechanismus, welcher gewährleistet, dass eine Bewegung der Treibbacke 11 von der Backenwechselstellung in die Arbeitsstellung nur möglich ist, wenn eine Spannbacke 5 in der Führungsnut 4 des Futterkörpers 2 angeordnet ist und die Verzahnung 12 von der Treibbacke 11 mit der Gegenverzahnung der eingesetzten Spannbacke 5 in Eingriff steht. Dazu umfasst der Kontrollmechanismus einen im Grundkörper 7 bewegbaren Arretierstift 25. Dieser ist relativ zum Grundkörper 7 in radialer Richtung bewegbar zwischen einer inneren Freigabeposition, in welcher die Treibbacke 11 axial beweglich ist, und einer äußeren Arretierposition, in welcher er in eine korrespondierende Ausnehmung 26 der Treibbacke 11 eingreift und diese ihrer Backenwechselstellung arretiert. Darüber hinaus umfasst der Kontrollmechanismus einen in einer vorderseitigen Bohrung 27 des Grundkörpers 7 angeordneten Kontrollbolzen 28, der zwischen einer vorderen Endstellung, in welcher er in die Führungsnut 4 des Futterkörpers 2 ragt, und einer hinteren Endstellung, in welcher er sich vollständig außerhalb der Führungsnut des Futterkörpers 2 befindet, bewegbar ist. Um eine in die Führungsnut 4 eingesetzte Spannbacke 5 sauber erkennen zu können, weist der Kontrollbolzen 28 vorderseitig eine ebene Stirnfläche 28a auf, die sich in radialer Richtung mindestens über eine Länge, welche der Teilung der Verzahnung 12 der Treibbacke 11 entspricht, erstreckt. Der Kontrollbolzen 28 weist nur eine sich über einen Teilabschnitt in seiner Längsrichtung erstreckenden Nut 29 auf, in welcher ein im Grundkörper 7 angeordnetes Gegenelement 30 eingreift, um durch Anlage einem Ende der Nut 29 die vordere Endstellung zu definieren.

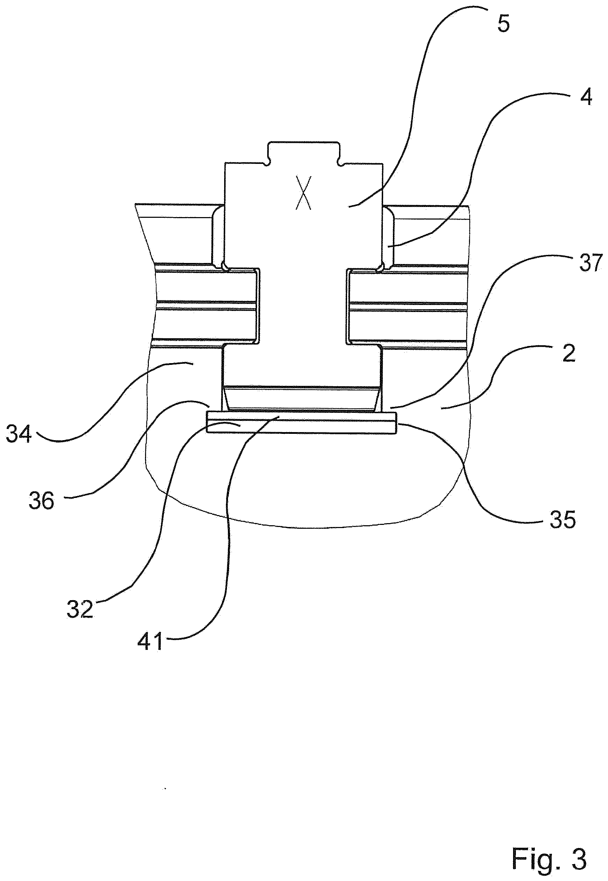

Der Kontrollmechanismus ist derart ausgebildet, dass der Arretierstift 25 die Arretierposition einnimmt, wenn die Treibbacke 11 in der Backenwechselstellung ist und sich keine Spannbacke 5 in der Führungsnut 4 befindet, wie dies in den Figuren 3 und 4 dargestellt ist. Wird eine Spannbacke 5 in die Führungsnut 4 eingesetzt, so wird der Kontrollbolzen 28 von der Spannbacke 5 in seine hintere Endstellung bewegt, wodurch der Arretierstift 25 gegen einen durch eine Schraubendruckfeder 31 aufgebrachte Druckkraft über eine Keilanordnung in die innere Freigabeposition bewegt wird. Dazu besitzen sowohl der Kontrollbolzen 28, als auch der Arretierstift 25 aneinander anliegende konusartige Abschnitte.

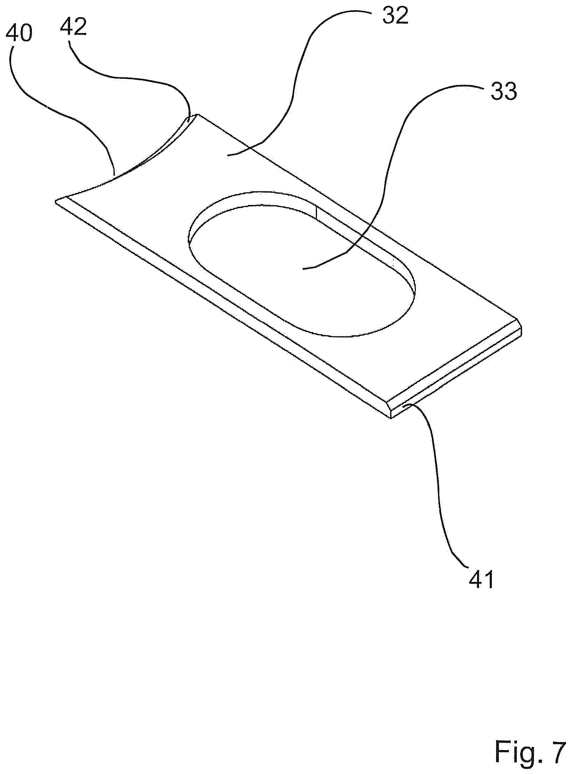

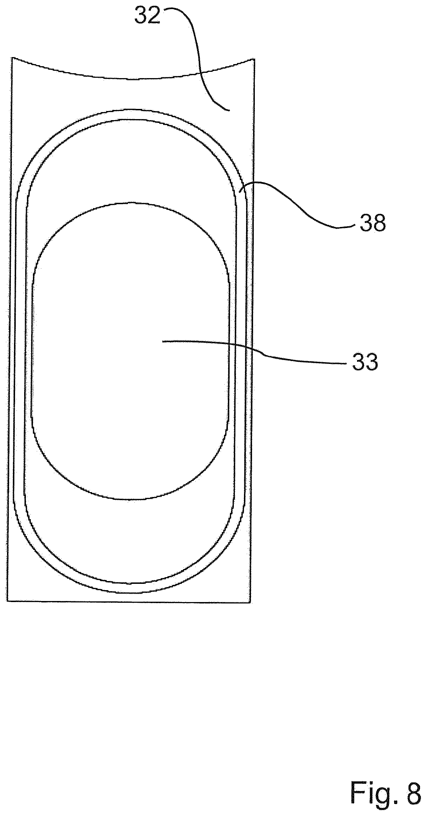

Darüber hinaus ist in jeder Führungsnut 4 ein radial mit den Treibbackeneinheiten 6 bewegbares flächiges Abdichtelement 32 vorgesehen, welches am Nutgrund anliegt und eine zentrale Aussparung 33 aufweist, in die der Vorsprung 10 des Grundkörpers 7 axial eingreift. Zur Verdeutlichung ist in den Figuren 7 und 8 das Abdichtelement 32 als einzelnes Bauteil detailliert dargestellt.

Das Abdichtelement 32 umgibt den Vorsprung 10 dabei ringförmig formschlüssig und liegt an dem Vorsprung 10 mit Spiel an, um ein Verkanten der Treibbackeneinheit 6 in der Führungsnut 4 zu vermeiden. Ferner ist es so ausgestaltet, dass es sich in jeder radialen Position des Grundkörpers 7 radial und in Breitenrichtung der Führungsnut 4 über die gesamte DurchgangsÖffnung 9 erstreckt. Dadurch wird dem Eindringen von Flüssigkeiten und/oder Schmutz in den Bereich der Führungstasche 8 entgegengewirkt.

Wie insbesondere in Figur 3 erkennbar weist die Führungsnut 4 einen T-förmigen Querschnitt mit einem vorderen Führungsnutabschnitt 34 mit Führungsmitteln für eine Spannbacke und einem gegenüber diesem verbreiterten hinteren Endabschnitt 35, in welchem das Abdichtelement 32 angeordnet ist, auf. Im Übergang vom hinteren Endabschnitt 35 zum vorderen Führungsnutabschnitt 34 sind Führungsschultern 36, 37 zum Halten des Abdichtelements 32 in axialer Richtung ausgebildet, die parallel zum Nutgrund der Führungsnut 4 orientiert sind. Das Abdichtelement 32 erstreckt sich über die gesamte Breite des hinteren Endabschnitts 35 der Führungsnut 4.

Ferner weist das Abdichtelement 32 in seiner zum Nutgrund weisenden Seite - wie in Figur 8 erkennbar - eine die Aussparung 33 umgebende umlaufende Nut 38 zur Aufnahme eines Dichtelements auf. Die umlaufende Nut 38 liegt dabei vollständig außerhalb des von der Durchgangsöffnung 9 überstrichenen Bereichs des Abdichtelements 32. Dadurch wird das Eindringen von Schmutz und/oder Flüssigkeiten zwischen dem Nutgrund und dem Abdichtelement 32 in jeder radialen Lage des Abdichtelements 32 wirksam vermieden. Wie in den Figuren 1 bis 6 dargestellt ist in der umlaufenden Nut 38 ein O-Ring 39 angeordnet.

Das Abdichtelement 32 weist eine radial nach innen zur Futterachse X gerichtete konkav ausgebildete Stirnseite 40 sowie eine als Ebene ausgebildete radial nach außen weisende Stirnseite 41 auf. Im Übergangsbereich von der radial inneren Stirnseite 40 zu der Vorderseite des Abdichtelements 32 wie auch im Übergangsbereich von der radial äußeren Stirnseite 41 zur Vorderseite ist jeweils eine Abstreiffase 42 ausgebildet, welche in einem Winkel von etwa 45° zur Vorderseite des Abdichtelements 32 geneigt ist. Die Abstreiffase 42 bewirkt, dass in die Führungsnut 4 eindringende Späne durch die Fase 42 in Verbindung mit den durch die Rotation des Spannfutters 1 auftretenden Fliehkräften nach vorne abgestreift werden und somit das Risiko eines Eindringens von Spänen in den Spalt zwischen dem Abdichtelement 32 und dem Nutgrund verringert wird.

Aus dem gleichen Grund ist in der Treibbacke 11 und in dem Kontrollbolzen 27 jeweils eine ringförmig umlaufende Nut 43, 44 ausgebildet, in welcher jeweils ein O-Ring 45, 46 angeordnet ist, um den zwischen der Treibbacke 11 und dem Grundkörper 7, sowie den zwischen dem Kontrollbolzen 28 und dem Grundkörper 7 ausgebildeten Spalt gegen ein Eindringen von Schmutz und Flüssigkeiten abzudichten. Auch in der Führungstasche 8 ist innenseitig umlaufend um die Durchgangsöffnung 9 eine ringförmig umlaufende Nut 47 ausgebildet, in welcher in O-Ring 48 angeordnet ist, um den zwischen dem Grundkörper 7 und der vorderen Wandung der Führungstasche 9 ausgebildeten Spalt gegen das Eindringen von Schmutz und Flüssigkeiten abzudichten.

Ferner sind bei dem Spannfutter 1 Abdichtmittel vorgesehen, um den jeweils zwischen den Ausklinkelementen 14 und der Aufnahmebohrung 15 des Futterkörpers 2 ausgebildeten Ringspalt abzudichten. Konkret weisen dazu die Ausklinkelemente 14 eine ringförmig umlaufende Nut 49 auf, in welche ein O-Ring 50 eingesetzt ist. Durch eine derartige Dichtung wird dem Austritt von Schmiermedium durch die Aufnahmebohrungen 15 nach außen in Folge der auftretenden Fliehkräfte entgegengewirkt.

Soll bei einem Spannfutter 1, wie es in den Figuren 1 und 2 mit eingebrachter Spannbacke 5 dargestellt ist, ein Backenwechsel vorgenommen werden, so ist zunächst der Futterkolben 13 in seine vorderen Endposition zu bewegen, womit einhergeht, dass sich der Grundkörper 7 der Treibbackeneinheit 6 in seine äußere Endposition bewegt. Dadurch wird das Ausklinkelement 14 freigegeben, so dass eine Drehung von seiner ersten in seine zweite Drehlage möglich ist. Zur Drehung des Ausklinkelements 14 von seiner ersten in seine zweite Drehlage ist ein Ausklinkschlüssel in diese einzubringen und zu drehen. Da aufgrund der Zwangsführung des Ausklinkelements 14 durch den in die Steuernut 21 eingreifenden Steuerbolzen 22 mit der Drehbewegung gleichzeitig eine translatorische Bewegung radial nach innen einhergeht, wird der Futterkolben 13 in seiner vorderen Endposition arretiert.

Gleichzeitig wird durch die Drehbewegung des Ausklinkelements 14 aufgrund des an der Treibbacke 11 anliegenden Exzenternockens 17 die Treibbacke 11 von ihrer Arbeitsstellung in ihre Backenwechselstellung abgesenkt, sodass anschließend die Spannbacke 5 aus der Führungsnut 4 radial nach außen herausgezogen werden kann. Auf die Treibbacke 11 wirkt eine axial nach hinten gerichtete Kraft, welche von der sich gegen den Grundkörper 7 abstützenden Schraubendruckfeder 16 aufgebracht wird. Durch die ebene Anlagefläche 17a, welche in der ersten Drehlage des Ausklinkelements 14 an der hinteren Stirnfläche 11a der Treibbacke 11 anliegt, wird die Treibbacke 11 beim Drehen des Ausklinkelements 14 zunächst gegen die auf sie wirkende axial nach hinten gerichtete Federkraft bewegt, sodass grundsätzlich in der ersten Drehlage ein stabiler Gleichgewichtszustand zwischen Ausklinkelement 14 und der korrespondierenden Treibbacke 11 vorliegt.

Bei der Entnahme der Spannbacke 5 wird der Kontrollbolzen 28 freigegeben, sodass sich dieser in seine vordere Endstellung bewegt und dabei den Arretierstift 25 derart freigibt, dass dieser sich betätigt durch die Schraubendruckfeder 31 in seine äußere Arretierposition bewegt und die Treibbacke 11 in der Backenwechselstellung arretiert, wie dies in den Figuren 3 und 4 dargestellt ist.

Wird im Anschluss eine neue Spannbacke 5 in die Führungsnut eingesetzt, so wird der Kontrollbolzen 28 durch die in die Führungsnut 4 eingesetzte Spannbacke 5 in seine hintere Endstellung bewegt. Durch die Keilanordnung wird der Arretierstift 25 gegen die durch die Schraubendruckfeder 30 aufgebrachte Druckkraft in seine innere Freigabeposition bewegt. Dadurch wiederrum wird die Treibbacke 11 freigegeben, sodass durch Drehung des Ausklinkelements 14 von seiner zweiten Drehlage in seine erste Drehlage die Treibbacke 11 in Eingriff mit der eingesetzten Spannbacke 5 gebracht wird. Gleichzeitig vollzieht das Ausklinkelement 14 eine translatorische Bewegung in seine radial äußere Position und gibt den Futterkolben 13 wieder frei. Da die Kugel 19 in der ersten Drehlage wieder in die Vertiefung 20 ragt, wird der Ausklinkschlüssel freigegeben und kann aus der Eingriffsöffnung 18 entnommen werden.

### Bezugszeichenliste

- 1: Spannfutter
- 2: Futterkörper
- 3: vordere Stirnfläche
- 4: Führungsnut
- 5: Spannbacke
- 6: Treibbackeneinheit
- 7: Grundkörper
- 8: Führungstasche
- 9: Durchgangsöffnung
- 10: Vorsprung
- 11: Treibbacke
- 11a: hintere Stirnfläche
- 11b: Betätigungsbolzen
- 12: Verzahnung
- 13: Futterkolben
- 14: Ausklinkelement
- 15: Aufnahmebohrung
- 16: Druckfeder
- 16a: Zwischenbolzen
- 17: Exzenternocken
- 17a: Anlagefläche
- 17b: Kontaktfläche
- 18: Eingriffsöffnung
- 19: Kugel
- 20: Vertiefung
- 21: Steuernut
- 22: Steuerbolzen
- 23: wendelartiger Nutabschnitt
- 24: weiterer Nutabschnitt
- 25: Arretierstift
- 26: Ausnehmung
- 27: vorderseitige Bohrung
- 28: Kontrollbolzen
- 28a: ebene Stirnfläche
- 29: Nut
- 30: Gegenelement
- 31: Schraubendruckfeder
- 32: Abdichtelement
- 33: Aussparung
- 34: vorderer Führungsnutabschnitt
- 35: hinterer Endabschnitt
- 36, 37: Führungsschultern
- 38: umlaufende Nut
- 39: O-Ring
- 40: radial innere Stirnseite
- 41: radial äußere Stirnseite
- 42: Abstreiffase
- 43, 44, 47, 49: Nut
- 45, 46, 48, 50: O-Ring

- X: Futterachse
- Y: Drehachse des Ausklinkelements

## Patentansprüche

1. Spannfutter (1) für Werkzeugmaschinen, insbesondere für Drehmaschinen, mit
einem eine Futterachse (X) definierenden Futterkörper (2), der in seiner vorderen Stirnfläche (3) mehrere sich radial zu der Futterachse (X) erstreckende Führungsnuten (4) zur Aufnahme von Spannbacken (5) aufweist,
wobei jeder Führungsnut (4) eine Treibbackeneinheit (6) zugeordnet ist, die
in einer hinter der Führungsnut (4) im Futterkörper (2) angeordneten Führungstasche (8) parallel zu der Führungsnut (4) bewegbar ist und eine die Führungsnut (4) und die Führungstasche (8) verbindende längliche Durchgangsöffnung (9) in axialer Richtung durchgreift und in die Führungsnut (4) vorragt,
wobei jede Treibbackeneinheit (6) eine Treibbacke (11) umfasst, die über eine vorderseitige Verzahnung (12) mit einer korrespondierenden Gegenverzahnung (12) einer Spannbacke (5) in Eingriff bringbar ist,
**dadurch gekennzeichnet, dass** in jeder Führungsnut (4) ein radial mit den Treibbackeneinheiten (6) bewegbares flächiges Abdichtelement (32) vorgesehen ist, welches am Nutgrund anliegt und eine zentrale Aussparung (33) aufweist in welche die Treibbackeneinheit (6) eingreift.

2. Spannfutter (1) nach Anspruch 1, **dadurch gekennzeichnet, dass** jede Treibbackeneinheit (6) einen Grundkörper (7) aufweist, an welchem die jeweilige Treibbacke (11) gehalten ist, wobei der Grundkörper (7) mit einem nach vorne vorstehenden Vorsprung (10) die Durchgangsöffnung (9) durchgreift und in die Führungsnut (4) vorragt, wobei insbesondere das Abdichtelement (32) den Vorsprung (10) des Grundkörpers (7) ringförmig insbesondere formschlüssig umgreift und/oder an dem Vorsprung (10) mit Spiel anliegt.

3. Spannfutter (1) nach Anspruch 2, **dadurch gekennzeichnet, dass** das Abdichtelement (32) derart ausgestaltet ist, dass es sich in jeder radialen Position des Grundkörpers (7) über die gesamte radiale Länge der Durchgangsöffnung (9) erstreckt.

4. Spannfutter (1) nach einem der vorherigen Ansprüche, **dadurch gekennzeichnet, dass** die Führungsnut (4) einen T-förmigen Querschnitt mit einem vorderen Führungsnutabschnitt (34), an dem Führungsmittel für eine Spannbacke vorgesehen sind, und einen gegenüber diesem verbreiterten hinteren Endabschnitt (35), in welchem das Abdichtelement (32) angeordnet ist, aufweist, wobei insbesondere im Übergang vom hinteren Endabschnitt (35) zum vorderen Führungsnutabschnitt (34) Führungsschultern (36, 37) zum Halten des Abdichtelements (32) in axialer Richtung ausgebildet sind, die insbesondere parallel zum Nutgrund der Führungsnut (4) orientiert sind und/oder wobei insbesondere sich das Abdichtelement (32) im Wesentlichen über die gesamte Breite des hinteren Endabschnitts (35) der Führungsnut (4) erstreckt.

5. Spannfutter (1) nach einem der vorherigen Ansprüche, **dadurch gekennzeichnet, dass** das Abdichtelement (32) in seiner zum Nutgrund weisenden Seite eine die Aussparung (33) umgebende umlaufende Nut (38) zur Aufnahme eines Dichtelements aufweist, wobei bevorzugt sich die umlaufende Nut (38) vollständig außerhalb des von der Durchgangsöffnung (9) überstrichenen Bereichs des Abdichtelements (32) liegt.

6. Spannfutter (1) nach Anspruch 5, **dadurch gekennzeichnet, dass** in der umlaufenden Nut (38) ein Dichtelement angeordnet ist, um einem Eindringen von Schmutz und/oder Flüssigkeiten zwischen dem Nutgrund und dem Abdichtelement (32) entgegenzuwirken, wobei insbesondere das Dichtelement als O-Ring (39) oder als Quadring ausgebildet ist.

7. Spannfutter (1) nach einem der vorherigen Ansprüche, **dadurch gekennzeichnet, dass** das Abdichtelement (32) eine radial nach innen zur Futterachse (X) gerichtete konkav ausgebildete Stirnseite (40) aufweist.

8. Spannfutter (1) nach einem der vorherigen Ansprüche, **dadurch gekennzeichnet, dass** im Übergangsbereich von der radial inneren Stirnseite (40) zu der Vorderseite und/oder von der radial äußeren Stirnseite (41) zur Vorderseite des Abdichtelements (32) eine Abstreiffase (42) ausgebildet ist, wobei insbesondere die Abstreiffase (42) in einem Winkel von mindestens 10 und/oder höchstens 60° zur Vorderseite des Abdichtelements (32) geneigt ist.

9. Spannfutter (1) nach einem der vorherigen Ansprüche, **dadurch gekennzeichnet, dass** die radial nach außen weisende Stirnseite (41) des Abdichtelements (32) als ebene Fläche oder konvex ausgebildet ist und/oder dass das Abdichtelement (32) aus einem metallischen Werkstoff, insbesondere einem Stahlwerkstoff, oder einem Kunststoff besteht.

10. Spannfutter (1) nach einem der Ansprüche 2 bis 9, **dadurch gekennzeichnet, dass** die Treibbacke (11) im Grundkörper (7) relativ zu diesem axial zwischen einer hinteren Backenwechselstellung, in welcher die Verzahnung (12) der Treibbacke (11) soweit aus der Führungsnut (4) abgesenkt ist, dass ein Backenwechsel möglich ist, und einer vorderen Arbeitsstellung, in welcher ein Backenwechsel nicht möglich ist, bewegbar ist, wobei die Treibbacke (11) in einer im Grundkörper (7) ausgebildeten Öffnung angeordnet ist.

11. Spannfutter (1) nach Anspruch 10, **dadurch gekennzeichnet, dass** Dichtmittel vorgesehen sind, um ein Eindringen von Schmutz und Flüssigkeiten in den zwischen der Treibbacke (11) und dem Grundkörper (7) ausgebildeten Ringspalt zu vermeiden, wobei insbesondere als Dichtmittel ein ringförmig umlaufender O-Ring (45) oder Quadring vorgesehen ist, der in einer in der Treibbacke (11) oder im Grundkörper (7) ausgebildeten umlaufenden Nut (43) angeordnet ist.

12. Spannfutter (1) nach einem der Ansprüche 2 bis 11, **dadurch gekennzeichnet, dass** die Treibbackeneinheit (6) ferner einen Kontrollbolzen (28) zur Erfassung der Anwesenheit einer Spannbacke (5) in der Führungsnut (4) umfasst, welcher in einer nach vorne offenen Bohrung (27) des Grundkörpers (7) axial beweglich angeordnet ist, wobei Dichtungsmittel vorgesehen sind, um den zwischen dem Kontrollbolzen (28) und der Bohrung (27) ausgebildeten Spalt gegen ein Eindringen von Schmutz und Flüssigkeiten abzudichten, wobei insbesondere als Dichtungsmittel ein ringförmig umlaufender O-Ring (46) oder ein Quadring vorgesehen ist, welcher in einer im Kontrollbolzen (28) oder im Grundkörper (7) ausgebildeten umlaufenden Nut (44) angeordnet ist.

13. Spannfutter (1) nach einem der Ansprüche 2 bis 12, **dadurch gekennzeichnet, dass** in der vorderseitigen Wandung der Führungstasche (8) eine die Durchgangsöffnung (9) zur Führungsnut (4) umgebende ringförmig umlaufende Nut (47) ausgebildet ist, in welcher ein Dichtmittel, insbesondere ein O-Ring (48) positioniert ist, um einem Eindringen von Schmutz und Flüssigkeiten durch den zwischen dem Grundkörper (7) und der Führungstasche (8) ausgebildeten Spalt entgegenzuwirken.

14. Spannfutter (1) nach einem der vorherigen Ansprüche, **dadurch gekennzeichnet, dass** jeder Treibbackeneinheit (6) ein Ausklinkmechanismus mit einem Ausklinkelement (14) zugeordnet ist, welches in einer Aufnahmebohrung des Futterkörpers (2) um eine quer zur Futterachse (X), insbesondere radial liegende Drehachse (Y) drehbar gelagert und mit der dazugehörigen Treibbacke (11) gekoppelt ist, um durch Drehung des Ausklinkelements (14) die Treibbacke zwischen ihrer Backenwechselstellung und ihrer Arbeitsstellung zu verstellen, wobei Abdichtmittel vorgesehen sind, um den zwischen dem Ausklinkelement (14) und der Aufnahmebohrung des Futterkörpers (2) ausgebildeten Ringspalt abzudichten.

15. Spannfutter (1) nach Anspruch 14, **dadurch gekennzeichnet, dass** als Abdichtmittel ringförmig umlaufende O-Ringe (50) oder Quadringe vorgesehen sind, welchee in einer im jeweiligen Ausklinkelement (14) oder im Futterkörper (2) ausgebildeten ringförmig umlaufenden Nut (49) angeordnet sind.

## Claims

1. Chuck (1) for machine tools, in particular for lathes, having
a chuck body (2) defining a chuck axis (X) and having in its front end face (3) a plurality of guide grooves (4) extending radially to the chuck axis (X) for receiving clamping jaws (5),
wherein a driving jaw unit (6) is associated with each guide groove (4),
which driving jaw unit (6) is movable parallel to the guide groove (4) in a guide pocket (8) arranged behind the guide groove (4) in the chuck body (2) and engages through an elongated passage opening (9) connecting the guide groove (4) and the guide pocket (8) in the axial direction and projects into the guide groove (4),
wherein each driving jaw unit (6) comprises a driving jaw (11) which can be brought into engagement via a front toothing (12) with a corresponding counter- toothing (12) of a clamping jaw (5),
**characterized in that** in each guide groove (4) there is provided a flat sealing element (32) which can be moved radially with the driving jaw units (6), rests against the groove base and has a central recess (33) in which the driving jaw unit (6) engages.

2. Chuck (1) according to claim 1, **characterized in that** each driving jaw unit (6) has a base body (7) on which the respective driving jaw (11) is held, wherein the base body (7) engages through the passage opening (9) with a forwardly projecting protrusion (10) and projects into the guide groove (4), wherein, in particular, the sealing element (32) engages around the protrusion (10) of the base body (7) in an annular manner, in particular in a form-locking manner, and/or bears against the protrusion (10) with clearance.

3. Chuck (1) according to claim 2, **characterized in that** the sealing element (32) is designed in such a way that it extends over the entire radial length of the passage opening (9) in any radial position of the base body (7).

4. Chuck (1) according to any of the previous claims, **characterized in that** the guide groove (4) has a T-shaped cross-section with a front guide groove section (34), on which guide means for a clamping jaw are provided, and a rear end section (35) which is wider than the guide groove section and in which the sealing element (32) is arranged, wherein, in particular, in the transition from the rear end section (35) to the front guide groove section (34) guide shoulders (36, 37) for holding the sealing element (32) in the axial direction are formed, which are oriented in particular parallel to the groove base of the guide groove (4), and/or wherein, in particular, the sealing element (32) extends substantially over the entire width of the rear end section (35) of the guide groove (4).

5. Chuck (1) according to any of the previous claims, **characterized in that** the sealing element (32) has, in its side facing the groove base, a circumferential groove (38) surrounding the recess (33) for receiving a seal element, the circumferential groove (38) preferably lying completely outside the region of the sealing element (32) swept by the passage opening (9).

6. Chuck (1) according to claim 5, **characterized in that** a seal element is arranged in the circumferential groove (38) in order to counteract the penetration of dirt and/or liquids between the groove base and the sealing element (32), wherein, in particular, the seal element is formed as an O-ring (39) or as a quad ring.

7. Chuck (1) according to any of the previous claims, **characterized in that** the sealing element (32) has a concave end face (40) directed radially inwards towards the chuck axis (X).

8. Chuck (1) according to any of the previous claims, **characterized in that** a wiping chamber-bevel (42) is formed in the transition region from the radially inner end face (40) to the front face and/or from the radially outer end face (41) to the front face of the sealing element (32), wherein, in particular, the wiping chamber-bevel (42) is inclined at an angle of at least 10° and/or at most 60° to the front face of the sealing element (32).

9. Chuck (1) according to any of the previous claims, **characterized in that** the radially outwardly facing end face (41) of the sealing element (32) is designed as a flat surface or convex, and/or **in that** the sealing element (32) consists of a metallic material, in particular a steel material, or a plastic.

10. Chuck (1) according to any of the claims 2 to 9, **characterized in that** the driving jaw (11) in the base body (7) is axially movable relative to the latter between a rear jaw changing position, in which the toothing (12) of the driving jaw (11) is lowered so far out of the guide groove (4) that a jaw change is possible, and a front operation position, in which a jaw change is not possible, the driving jaw (11) being arranged in an opening formed in the base body (7).

11. Chuck (1) according to claim 10, **characterized in that** seal means are provided to prevent the penetration of dirt and liquids into the annular gap formed between the driving jaw (11) and the base body (7), wherein, in particular, an annular O-ring (45) or a quad ring is provided as a seal means, which is arranged in a circumferential groove (43) formed in the driving jaw (11) or in the base body (7).

12. Chuck (1) according to any of claims 2 to 11, **characterized in that** the driving jaw unit (6) further comprises a control bolt (28) for detecting the presence of a clamping jaw (5) in the guide groove (4), which control bolt is arranged axially movably in a forwardly open bore (27) of the base body (7), sealing means being provided, in order to seal the gap formed between the control bolt (28) and the bore (27) against the penetration of dirt and liquids, wherein, in particular, an annular O-ring (46) or a quad ring is provided as sealing means, which is arranged in a circumferential groove (44) formed in the control bolt (28) or in the base body (7).

13. Chuck (1) according to any of claims 2 to 12, **characterized in that** an annular groove (47) surrounding the passage opening (9) to the guide groove (4) is formed in the front wall of the guide pocket (8), in which groove a seal means, in particular an O-ring (48), is positioned in order to counteract the penetration of dirt and liquids through the gap formed between the base body (7) and the guide pocket (8).

14. Chuck (1) according to any of the previous claims, **characterized in that** a notching mechanism with a notching element (14) is associated with each driving jaw unit (6), which notching element is mounted in a receiving bore of the chuck body (2) so as to be rotatable about an axis of rotation (Y) lying transversely to the chuck axis (X), in particular radially, and is coupled with the associated driving jaw (11) in order to adjust the driving jaw between its jaw changing position and its operation position by rotation of the notching element (14), sealing means being provided in order to seal the annular gap formed between the notching element (14) and the receiving bore of the chuck body (2).

15. Chuck (1) according to claim 14, **characterized in that** annular O-rings (50) or quad rings are provided as sealing means, which are arranged in an annular groove (49) formed in the respective notching element (14) or in the chuck body (2).

## Revendications

1. Mandrin de serrage (1) pour machines-outils, en particulier pour tours, avec
un corps de mandrin (2) définissant un axe de mandrin (X) et présentant dans sa face frontale (3) une pluralité de rainures de guidage (4) s'étendant radialement par rapport à l'axe de mandrin (X) pour recevoir des mâchoires de serrage (5),
à chaque rainure de guidage (4) étant associée une unité de mâchoire d'entraînement (6), qui
est mobile parallèlement à la rainure de guidage (4) dans une poche de guidage (8) disposée derrière la rainure de guidage (4) dans le corps de mandrin (2) et s'engage à travers une ouverture de passage allongée (9) reliant la rainure de guidage (4) et la poche de guidage (8) dans la direction axiale et fait saillie dans la rainure de guidage (4),
chaque unité de mâchoire d'entraînement (6) comprenant une mâchoire d'entraînement (11) qui peut être mise en engagement au moyen d'une denture frontale (12) avec une contre-denture correspondante (12) d'une mâchoire de serrage (5)
**caractérisé en ce que,** dans chaque rainure de guidage (4), il est prévu un élément d'étanchéification plat (32) qui est mobile radialement avec les unités de mâchoire d'entraînement (6) et qui s'appuie contre le fond de la rainure et présente un évidement central (33) dans lequel l'unité de mâchoire d'entraînement (6) s'engage.

2. Mandrin de serrage (1) selon la revendication 1, **caractérisé en ce que** chaque unité de mâchoire d'entraînement (6) présente un corps de base (7) sur lequel est maintenue la mâchoire d'entraînement (11) respective, le corps de base (7) traversant l'ouverture de passage (9) au moyen d'une saillie (10) faisant saillie vers l'avant et pénétrant dans la rainure de guidage (4), l'élément d'étanchéification (32) entourant de manière annulaire, en particulier par complémentarité de forme, la saillie (10) du corps de base (7) et/ou s'appuyant avec du jeu sur la saillie (10).

3. Mandrin de serrage (1) selon la revendication 2, **caractérisé en ce que** l'élément d'étanchéification (32) est conçu de telle manière que, dans toute position radiale du corps de base (7), il s'étend sur toute la longueur radiale de l'ouverture de passage (9).

4. Mandrin de serrage (1) selon l'une des revendications précédentes, **caractérisé en ce que** la rainure de guidage (4) présente une section transversale en forme de T avec une section de rainure de guidage avant (34), sur laquelle sont prévus des moyens de guidage pour une mâchoire de serrage, et une section d'extrémité arrière (35) élargie par rapport à celle-ci et dans laquelle est disposé l'élément d'étanchéification (32), des épaulements de guidage (36, 37), qui sont orientés en particulier parallèlement au fond de la rainure de guidage (4), étant en particulier formés dans la transition entre la partie d'extrémité arrière (35) et la partie avant de la rainure de guidage (34) pour maintenir l'élément d'étanchéification (32) dans la direction axiale, et/ou l'élément d'étanchéification (32) s'étendant en particulier sensiblement sur toute la largeur de la partie d'extrémité arrière (35) de la rainure de guidage (4).

5. Mandrin de serrage (1) selon l'une des revendications précédentes, **caractérisé en ce que** l'élément d'étanchéification (32) présente, dans sa face tournée vers le fond de la rainure, une rainure circonférentielle (38) entourant l'évidement (33) pour recevoir un élément d'étanchéité, la rainure circonférentielle (38) étant de préférence située complètement à l'extérieur de la zone de l'élément d'étanchéification (32) balayée par l'ouverture de passage (9).

6. Mandrin de serrage (1) selon la revendication 5, **caractérisé en ce qu'**un élément d'étanchéité est disposé dans la rainure circonférentielle (38) afin de contrecarrer la pénétration de saletés et/ou de liquides entre le fond de la rainure et l'élément d'étanchéification (32), l'élément d'étanchéité étant conçu en particulier comme un joint torique (39) ou comme une bague quadruple.

7. Mandrin de serrage (1) selon l'une des revendications précédentes, **caractérisé en ce que** l'élément d'étanchéification (32) présente une face frontale concave (40) dirigée radialement vers l'intérieur en direction de l'axe de mandrin (X).

8. Mandrin de serrage (1) selon l'une des revendications précédentes, **caractérisé en ce qu'**un chanfrein de raclage (42) est formé dans la zone de transition entre la face frontale radialement intérieure (40) et la face frontale et/ou entre la face frontale radialement extérieure (41) et la face frontale de l'élément d'étanchéification (32), le chanfrein de raclage (42) étant notamment incliné d'un angle d'au moins 10° et/ou d'au plus 60° par rapport à la face frontale de l'élément d'étanchéification (32).

9. Mandrin de serrage (1) selon l'une des revendications précédentes, **caractérisé en ce que** la face frontale (41) tournante radialement vers l'extérieur de l'élément d'étanchéification (32) est conçue comme une surface plane ou convexe et/ou **en ce que** l'élément d'étanchéification (32) est constitué d'un matériau métallique, en particulier d'un matériau en acier, ou d'un matériau plastique.

10. Mandrin de serrage (1) selon l'une des revendications 2 à 9, **caractérisé en ce que** la mâchoire d'entraînement (11) dans le corps de base (7) peut être déplacée axialement par rapport à celui-ci entre une position arrière de changement de mâchoire, dans laquelle la denture (12) de la mâchoire d'entraînement (11) est abaissée hors de la rainure de guidage (4) de telle sorte qu'un changement de mâchoire est possible, et une position avant de travail, dans laquelle un changement de mâchoire n'est pas possible, la mâchoire d'entraînement (11) étant disposée dans une ouverture formée dans le corps de base (7).

11. Mandrin de serrage (1) selon la revendication 10, **caractérisé en ce que** des moyens d'étanchéité sont prévus pour empêcher la pénétration de saletés et de liquides dans la fente annulaire formée entre la mâchoire d'entraînement (11) et le corps de base (7), en particulier un joint torique (45) ou une bague quadruple périphérique étant prévu comme moyen d'étanchéité, qui est disposé dans une rainure périphérique (43) formée dans la mâchoire d'entraînement (11) ou dans le corps de base (7).

12. Mandrin de serrage (1) selon l'une des revendications 2 à 11, **caractérisé en ce que** l'unité de mâchoire d'entraînement (6) comprend en outre un boulon de commande (28) pour détecter la présence d'une mâchoire de serrage (5) dans la rainure de guidage (4), lequel boulon de commande (28) est disposé de manière axialement mobile dans un alésage (27) ouvert vers l'avant du corps de base (7), des moyens d'étanchéité étant prévus pour assurer l'étanchéité de la fente formée entre le boulon de commande (28) et l'alésage (27) contre la pénétration de saletés et de liquides, un joint torique (46) ou une bague quadruple périphérique en particulier étant prévu comme moyen d'étanchéité et étant disposé dans une rainure circonférentielle (44) formée dans le boulon de commande (28) ou dans le corps de base (7).

13. Mandrin de serrage (1) selon l'une des revendications 2 à 12, **caractérisé en ce que** dans la paroi frontale de la poche de guidage (8) est formée une rainure périphérique annulaire (47) entourant l'ouverture de passage (9) vers la rainure de guidage (4), dans laquelle est placé un moyen d'étanchéité, en particulier un joint torique (48), afin de s'opposer à la pénétration de saletés et de liquides par la fente formée entre le corps de base (7) et la poche de guidage (8).

14. Mandrin de serrage (1) selon l'une des revendications précédentes, **caractérisé en ce qu'**à chaque unité de mâchoires d'entraînement (6) est associé un mécanisme d'encliquetage avec un élément de décliquetage (14), qui est monté à rotation dans un alésage de réception du corps de mandrin (2) autour d'un axe de rotation (Y) situé transversalement à l'axe de mandrin (X), en particulier radialement, et est couplé à la mâchoire d'entraînement (11) associée, afin d'ajuster la mâchoire d'entraînement entre sa position de changement de mâchoire et sa position de travail par rotation de l'élément de décliquetage (14), des moyens d'étanchéité étant prévus pour rendre étanche l'espace annulaire formé entre l'élément de décliquetage (14) et l'alésage de réception du corps du mandrin (2).

15. Mandrin de serrage (1) selon la revendication 14, **caractérisé en ce que** des joints toriques (50) ou des bagues quadruples périphériques sont prévus comme moyens d'étanchéité, qui sont disposés dans une rainure (49) à circonférence annulaire formée dans l'élément de décliquetage (14) respectif ou dans le corps de mandrin (2).
